# EUROPEAN PATENT APPLICATION

(11) **EP 4 810 826 A1**
(43) Date of publication of application: **23.09.2026**
(21) Application number: 25859874.7
(22) Date of filing: 29.07.2025
(51) Int. Cl.: F16H 25/22, F16H 25/24

(54) **BALL SCREW DEVICE**

(30) Priority: 27.08.2024 JP 2024145242
(71) Applicant: NSK Ltd., Tokyo 141-8560 (JP)
(72) Inventor: YUMIBA Shuhei, Fujisawa-shi, Kanagawa 251-8501 (JP); SAKAI Motoshi, Fujisawa-shi, Kanagawa 251-8501 (JP)
(74) Representative: Müller-Boré & Partner Patentanwälte PartG mbB
(86) International application number: PCT/JP2025/026821
(87) International publication number: WO 2026/048378

(57) **Abstract**

Provided is a ball screw device capable of holding a sufficient amount of lubricant in a circulation groove. This ball screw device includes: a screw shaft having a shaft-side spiral groove in an outer peripheral surface thereof; a nut 3 having, on an inner peripheral surface thereof, a nut-side spiral groove 7 and a roughly S-shaped circulation groove 9 connecting an end point and a start point of a spiral-shaped load path 8 configured by the shaft-side spiral groove 5 and nut-side spiral groove 7; and a plurality of balls 4 arranged on an inner side of the load path 8 and the circulation groove 9. The circulation groove 9 has, in a surface thereof, a recessed lubricant holding portion 11 for holding the lubricant.

## Description

### TECHNICAL FIELD

The present disclosure relates to a ball screw device as a mechanical element for converting linear motion to rotational motion or rotational motion to linear motion.

### BACKGROUND ART

In ball screw devices, balls roll between a screw shaft and a nut, and thus higher efficiency compared to sliding screw devices, in which there is direct contact between the screw shaft and nut, is obtained. Therefore, ball screw devices are incorporated into various mechanical devices such as electric brake systems and automatic manual transmissions (AMT) in automobiles, and positioning devices in machine tools, in order to convert rotational motion of a drive source such as an electric motor into linear motion.

A ball screw device includes a screw shaft having a shaft-side spiral groove on an outer peripheral surface thereof, a nut having a nut-side spiral groove on an inner peripheral surface thereof, and a plurality of balls arranged to roll freely between the shaft-side spiral groove and the nut-side spiral groove. A lubricant such as grease is filled between the outer peripheral surface of the screw shaft and the inner peripheral surface of the nut to allow the balls to roll smoothly.

The shaft-side spiral groove and the nut-side spiral groove are arranged to face each other in a radial direction, forming a spiral-shaped load path. A start point and end point of the load path are connected by a circulation mechanism. The circulation mechanism returns balls that have reached the end point of the load path back to the start point of the load path, thus creating an endless circulation of the balls. The start point and end point of the load path are reversed depending on a direction of relative axial displacement (relative rotation direction) between the screw shaft and the nut.

In a ball screw device, depending on the application, one of the screw shaft and the nut is used as a rotational motion element, and the other of the screw shaft and the nut is used as a linear motion element.

In ball screw devices, it has been common practice to use circulation components such as deflectors, tubes, and end deflectors as a circulation mechanism. JP 2014-062570A discloses a ball screw device structure that, in order to miniaturize and reduce the cost of the ball screw device, omits the circulation components and instead forms a roughly S-shaped circulation groove directly on the inner peripheral surface of the nut as the circulation mechanism.

### CITATION LIST

### PATENT LITERATURE

Patent Literature 1: JP 2014-062570A

### SUMMARY OF INVENTION

### TECHNICAL PROBLEM

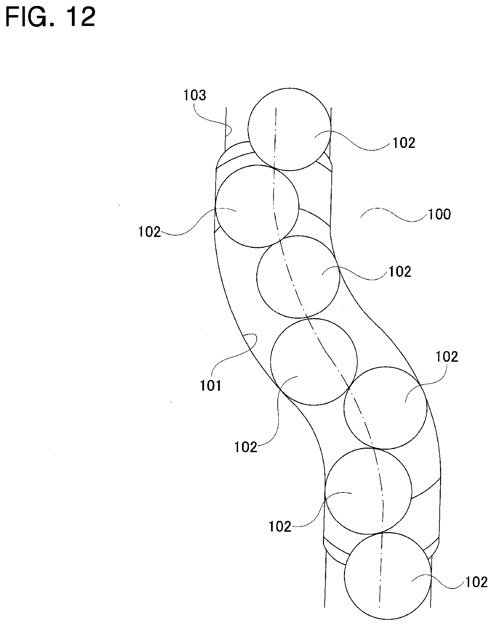

As illustrated in FIG. 12, a circulation groove 101 formed on an inner peripheral surface of a nut 100 has a groove width that is larger than a diameter of balls 102. In addition, balls 102 inside the circulation groove 101 moves when pushed by balls 102 located behind the balls 102 in a direction of movement of the balls 102. Therefore, the balls 102 inside the circulation groove 101 are arranged alternately in the groove width direction (left-right direction in FIG. 12) and move while rubbing against a surface of the circulation groove 101.

As a result, it becomes easier for the lubricant in the circulation groove 101 to be scraped out into a load path 103 by the balls 102. Moreover, position of the circulation groove 101 may cause variations in an amount of lubricant remaining. As a result, metal-to-metal contact may occur between adjacent balls 102, between balls 102 and the circulation groove 101, or both, which may cause damage such as indentations on a surface of the balls 102, a surface of circulation groove 101, or both.

An object of the present disclosure is to provide a ball screw device that can hold a sufficient amount of lubricant in the circulation groove.

### SOLUTION TO PROBLEM

A ball screw device according to one aspect of the present disclosure includes a screw shaft, a nut, and a plurality of balls.

The screw shaft has a shaft-side spiral groove on an outer peripheral surface thereof.

The nut has, on an inner peripheral surface thereof, a nut-side spiral groove, and a roughly S-shaped circulation groove connecting an end point and a start point of a spiral-shaped load path formed by the shaft-side spiral groove and the nut-side spiral groove.

The plurality of balls are arranged on an inner side of the load path and the circulation groove.

The circulation groove has, on a surface thereof, one or more recessed lubricant holding portions for holding lubricant. Note that grease is preferred as a lubricant; however, the lubricant may include not only grease but also lubricating oil.

In a ball screw device according to one aspect of the present disclosure, surface roughness of the circulation groove is greater than surface roughness of the nut-side spiral groove. Note that the surface roughness of the circulation groove refers to the surface roughness of the entire surface of the circulation groove, including a portion on which the one or more lubricant holding portions are formed.

In a ball screw device according to one aspect of the present disclosure, the surface roughness of the circulation groove is 1.6 µm or more in terms of arithmetic mean roughness Ra.

In a ball screw device according to one aspect of the present disclosure, the surface of the nut-side spiral groove is a ground surface, and the surface of the circulation groove is a non-ground surface.

In a ball screw device according to one aspect of the present disclosure, the surface of the circulation groove is a blasted surface, that is, a surface processed by shot blasting.

In a ball screw device according to one aspect of the present disclosure, the lubricant holding portions are arranged irregularly.

In a ball screw device according to one aspect of the present disclosure, the lubricant holding portions are arranged regularly.

In a ball screw device according to one aspect of the present disclosure, the one or more lubricant holding portions is one or more hole-shaped recessed portions or one or more groove-shaped recessed groove.

In a ball screw device according to one aspect of the present disclosure, the one or more lubricant holding portions are entirely provided across the surface of the circulation groove.

In a ball screw device according to one aspect of the present disclosure, the one or more lubricant holding portions are partially provided on the surface of the circulation groove.

In a ball screw device according to one aspect of the present disclosure, the lubricant holding portions are provided on both side portions in a length direction of the circulation groove.

In a ball screw device according to one aspect of the present disclosure, the lubricant holding portions are provided in scooping portions provided on a part of both side portions in the length direction of the circulation groove.

### EFFECT OF INVENTION

With a ball screw device according to one aspect of the present disclosure, a sufficient amount of lubricant can be held in the circulation groove.

### BRIEF DESCRIPTION OF DRAWINGS

FIG. 1 is a cross-sectional view of a ball screw device of a first example of an embodiment according to the present disclosure.
FIG. 2 is a cross-sectional view of a nut of the ball screw device of the first example.
FIG. 3 is an exploded view of an inner peripheral surface of the nut of the ball screw device of the first example.
FIG. 4 is a partial enlarged view of FIG. 2.
FIG. 5 is a diagram corresponding to FIG. 4, of a ball screw device of a second example of an embodiment according to the present disclosure.
FIG. 6 is a cross-sectional view taken along line A-A in FIG. 5.
FIG. 7 is a diagram corresponding to FIG. 4, of a ball screw device of a third example of an embodiment according to the present disclosure.
FIG. 8 is a diagram corresponding to FIG. 4, of a ball screw device of a fourth example of an embodiment according to the present disclosure.
FIG. 9 is a diagram corresponding to FIG. 4, of a ball screw device of a fifth example of an embodiment according to the present disclosure.
FIG. 10 is a diagram corresponding to FIG. 4, of a ball screw device of a sixth example of an embodiment according to the present disclosure.
FIG. 11 is a diagram corresponding to FIG. 4, of a ball screw device of a seventh example of an embodiment according to the present disclosure.
FIG. 12 is a diagram illustrating problems with known ball screw devices.

### DESCRIPTION OF EMBODIMENTS

### [First Example]

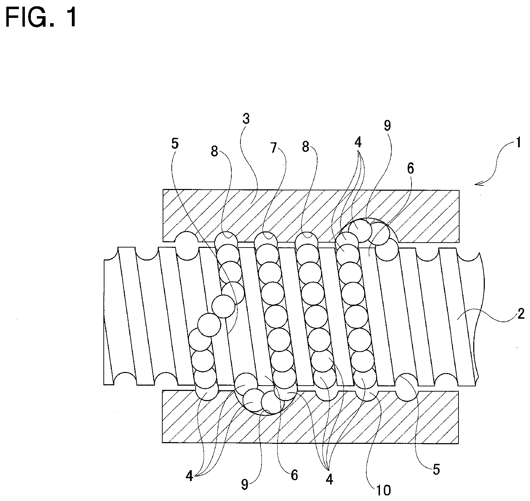

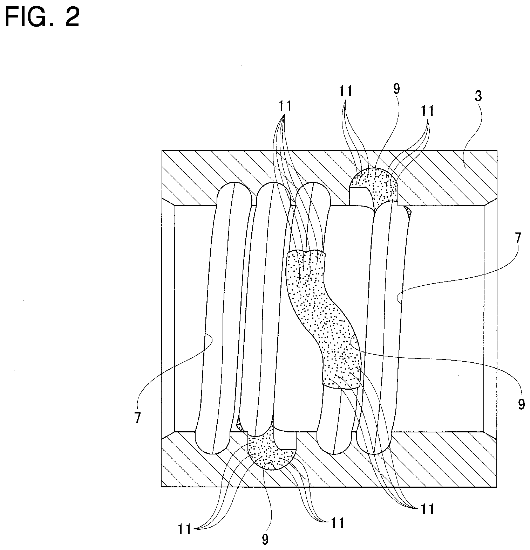

A first example of an embodiment according to the present disclosure will be described using FIGS. 1 to 4.

A ball screw device 1 of this example can be widely applied to applications that convert linear motion to rotational motion or rotational motion to linear motion. Particularly, the ball screw device 1 according to the present example can be incorporated into mechanical devices such as electric brake devices (EMB), electric brake booster devices (EHB), and gear ratio switching devices, and used for the purpose of converting rotational motion into linear motion.

The ball screw device 1 includes a screw shaft 2, a nut 3, and a plurality of balls 4.

In the following description, unless otherwise specified, an axial direction, a radial direction, and a circumferential direction refer to the axial direction, the radial direction, and the circumferential direction with respect to the screw shaft 2. The axial direction, the radial direction, and the circumferential direction of the screw shaft 2 coincide with the axial direction, the radial direction, and the circumferential direction of the nut 3.

The screw shaft 2 is made of a metal such as an iron-based alloy and has a roughly cylindrical column shape. The screw shaft 2 is inserted inside the nut 3 and is positioned coaxially with the nut 3.

The screw shaft has a shaft-side spiral groove 5 on an outer peripheral surface thereof. A groove shape (groove bottom shape) of a cross-section of the shaft-side spiral groove 5 is not limited to this, and could also be a Gothic arch groove, a circular arc groove, or the like. The shaft-side spiral groove 5 is formed on the outer peripheral surface of the screw shaft 2 by, for example, a cutting process or a rolling process, and a grinding process. The screw shaft 2 has a land portion 6 between adjacent shaft-side spiral grooves 5. The shaft-side spiral groove 5 can have one or any number of starts; however, in this example, there is one start.

The nut 3 is made of metal such as an iron-based alloy and has a roughly cylindrical tube shape. The nut 3 has a nut-side spiral groove 7 on an inner peripheral surface thereof. The nut 3 has a plurality of nut-side spiral grooves 7 on the inner peripheral surface. In the present example, the nut 3 has four nut-side spiral grooves 7 on the inner peripheral surface. Each of the nut-side spiral grooves 7 has the same lead as the shaft-side spiral groove 5. The nut-side spiral groove 7 has the same number of starts as the shaft-side spiral groove 5, which in this example is one start. The groove shape of a cross-section of the nut-side spiral groove 7 is not limited to this, and could also be a Gothic arch groove, a circular arc groove, or the like. The nut-side spiral groove 7 is formed on the inner peripheral surface of the nut 3 by, for example, a cutting process such as a cutting tap process or a rolling process such as a rolling tap process, and a grinding process.

The shaft-side spiral groove 5 and the nut-side spiral groove 7 are arranged facing each other in the radial direction, forming a spiral-shaped load path 8. A plurality of load paths 8 may be provided. In the present example, four load paths 8 are formed between the shaft-side spiral groove 5 and the nut-side spiral grooves 7. Each load path 8 encircles the outer circumference of the shaft-side spiral groove 5 by approximately one full turn. Note that, even when there are two starts on the shaft-side spiral groove 5 and two starts on the nut-side spiral groove 7, each load path 8 will circle the outer circumference of the shaft-side spiral groove 5 approximately once.

The nut 3 has a roughly S-shaped circulation groove 9 on the inner peripheral surface thereof that connects an end point and a start point of the load path 8. The circulation groove 9 has a roughly S-shape when viewed from inside in the radial direction of the nut 3. The circulation groove 9 has an end portion on one side in a length direction thereof that is connected to the end point of the load path 8, and has an end portion on the other side in the length direction thereof that is connected to the start point of the load path 8. A middle portion of the circulation groove 9 in the length direction is arranged to cross the land portion 6 of the screw shaft 2.

The circulation groove 9 has a roughly semicircular cross-sectional shape. The circulation groove 9 has a groove width that is slightly larger than a diameter of the balls 4. The circulation groove 9 is a groove deeper than the nut-side spiral groove 7, and has a groove depth that allows the balls 4 moving through the circulation groove 9 to go over the land portion 6.

The circulation groove 9 is formed directly on the inner peripheral surface of the nut 3, for example, by a cutting process or a forging process. The circulation groove 9 is processed on the inner peripheral surface of the nut 3 separately from, or simultaneously with, the nut-side spiral groove 7.

The nut 3 has a plurality of circulation grooves 9 on the inner peripheral surface. The number of circulation grooves 9 on the inner peripheral surface of the nut 3 corresponds to the number of load paths 8, but is not particularly limited. In addition, an arrangement position of the circulation groove 9 is not particularly limited. It is preferable that the plurality of circulation grooves 9 be arranged at equal intervals in the circumferential direction. In the present example, the nut 3 has four circulation grooves 9 on the inner peripheral surface thereof, the same number as the number of nut-side spiral grooves 7. The four circulation grooves 9 are spaced at 90-degree angles to each other.

The balls 4 are steel balls having a predetermined diameter, and are rotatably positioned between the shaft-side spiral groove 5 and the nut-side spiral grooves 7, in other words, in the load paths 8, and are positioned inside the circulation grooves 9, circulating between the load paths 8 and the inside of the circulation grooves 9. The balls 4 arranged in the load paths 8 roll while under a compressive load, whereas the balls 4 inside the circulation grooves 9 move without being subjected to a compressive load, and are pushed by the balls 4 behind them in the direction of the movement of the balls 4.

As the screw shaft 2 or the nut 3 rotates, the ball 4 that has reached the end point of the load path 8 is returned to the start point of the load path 8 through the circulation groove 9. Thus, the balls 4 circulate indefinitely within the load path 8. The start point and the end point of the load path 8 are reversed depending on the relative rotation direction between the screw shaft 2 and the nut 3.

In order to enable the smooth rolling of the balls 4, the ball screw device 1 has grease (not illustrated) filled as a lubricant in an annular space 10 between the outer peripheral surface of the screw shaft 2 and the outer peripheral surface of the nut 3. The ball screw device 1 may also include a sealing member at an opening portion of the annular space 10 to prevent grease leakage from the annular space 10. Note that grease is preferred as a lubricant; however, lubricating oil can be used instead of grease.

The lubricant filled in the annular space 10 adheres to the surfaces of the balls 4, the shaft-side spiral groove 5, the nut-side spiral grooves 7, and the circulation grooves 9, respectively. The lubricant adheres to the balls 4 and flows.

To prevent the lubricant in the circulation grooves 9 from being depleted, each circulation grooves 9 has a recessed lubricant holding portion 11 on a surface thereof for holding the lubricant. The lubricant holding portion 11 has a shape that is recessed from the surface of the circulation groove 9.

A lubricant holding portion 11 is not provided on the surface of the nut-side spiral groove 7.

The lubricant holding portion 11 can have any shape as long as lubricant can be held. For example, the lubricant holding portion 11 can be configured by, but is not limited to, a minute recessed portion (indentation), hole-shaped recessed portion, groove-shaped recessed groove, or the like.

The number of lubricant holding parts 11 can be one or any number depending on the shape thereof. When the lubricant holding portion 11 is composed of a plurality of lubricant holding parts 11, each lubricant holding portion 11 can be arranged irregularly or regularly.

Moreover, the lubricant holding portions 11 can be provided across the entire surface of the circulation groove 9.

Alternatively, the lubricant holding portions 11 may be partially provided on the surface of the circulation groove 9. In this case, lubricant holding portionss 11 can be provided on both side portions of the circulation groove 9 in the length direction. Preferably, the lubricant holding portions 11 can be provided in scooping portions provided on a part of both sides in the length direction of the circulation groove 9.

In the present example, the lubricant holding portion 11 is composed of a plurality of (innumerable) lubricant holding portions 11. The lubricant holding portions 11 are provided across the entire surface of the circulation groove 9 and are arranged irregularly (randomly).

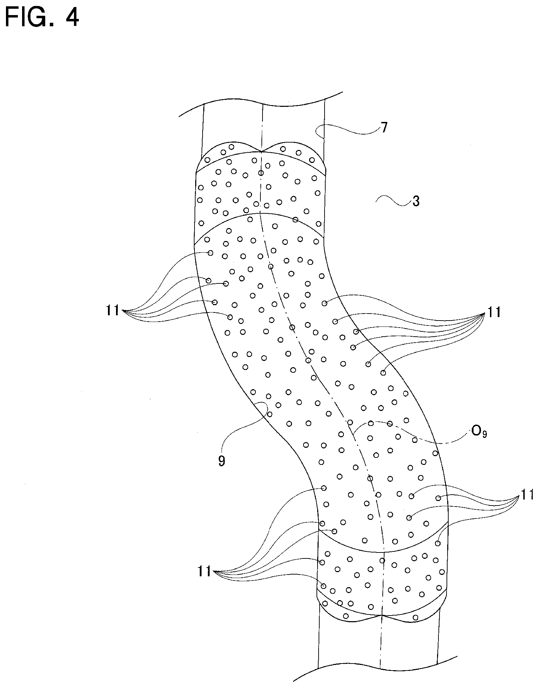

The lubricant holding portion 11 is composed of a minute recessed portion (indentation). The lubricant holding portions 11 are preferably formed by applying shot blasting (dimple processing) to the surface of the circulation groove 9. In this case, the lubricant holding portions 11 are minute recessed portions having a specific or unspecified (irregular) shape, formed on the surface of the circulation groove 9 by the collision of steel balls as projectile material. The lubricant holding portions 11 include not only a single independent recessed portions, but also recessed portions formed by a series of consecutive recessed portions. Note that in FIG. 4, the opening portions of the lubricant holding portions 11 are schematically illustrated as circles, all having the same diameter.

Surface roughness of the circulation groove 9 is greater than that of the nut-side spiral groove 7 due to formation of the lubricant holding portions 11 In the present example, the surface roughness of the circulation groove 9 is 1.6 µm or more in terms of arithmetic mean roughness Ra, while the surface roughness of the nut-side spiral groove 7 is less than 1.6 µm in terms of arithmetic mean roughness Ra. Note that the surface roughness of the circulation groove 9 refers to the surface roughness of the entire surface of the circulation groove 9, including a portion on which the lubricant holding portions 11 are formed.

When the surface roughness of the circulation groove 9 is less than 1.6 µm in terms of arithmetic mean roughness Ra, the lubricant holding portions 11 are not sufficiently formed, making it difficult to hold a sufficient amount of lubricant (preferably grease) in the circulation groove 9.

The nut-side spiral groove 7 is a ground surface formed by a grinding process, while the circulation groove 9 is not a ground surface formed by a grinding process. The surface of the circulation groove 9 has undergone a surface roughening process. As the surface roughening process, in addition to a shot blasting process, a mechanical processing method such as a knurling process, a transfer process, an electrical discharge process, an electron beam process, and a laser process, or a chemical processing method such as an etching process may be employed. In the present example, the surface of the circulation groove 9 has undergone a shot blasting process.

The surface of the circulation groove 9 has properties corresponding to the type of surface roughening process. The cross-sectional shape of the circulation groove 9 with the lubricant holding portions 11 formed on the surface thereof can be configured, for example, as a roughly triangular wave shape, a roughly sawtooth shape, or the like. When the surface roughening process is a shot blasting process, the surface of the circulation groove 9 is an uneven blasted surface with a non-periodic roughness curve.

### [Nut Manufacturing Method]

An example of a manufacturing method for the nut 3 of the ball screw device 1 of the present example will be described.

### <Circulation Groove Formation Process>

First, a metal material having a roughly cylindrical tube shape is prepared. Then, the inner peripheral surface of the material is subjected to a forging process or a cutting process to form a circulation groove 9, thereby obtaining a first intermediate material. No lubricant holding portion 11 is formed on the surface of the circulation groove 9 that is formed on the inner peripheral surface of the first intermediate material.

### <Nut-side Spiral Groove Formation Process>

The inner peripheral surface of the first intermediate material is subjected to a cutting process, such as a cutting tap process, to form a nut-side spiral groove 7, thereby obtaining a second intermediate material. The inner peripheral surface of the second intermediate material is provided with a nut-side spiral groove 7 and a circulation groove 9. Note that the circulation groove formation process and the nut-side spiral groove formation process can be performed simultaneously.

### <Heat Treatment Process>

A third intermediate material is obtained by subjecting the second intermediate material to a heat treatment process such as a carburizing and quenching process or high-frequency induction hardening process, or the like.

### <Surface Roughening (Shot Blasting) Process>

A fourth intermediate material is obtained by performing a surface roughening process on the third intermediate material, or more specifically, on the inner peripheral surface of the third intermediate material. In the present example, steel balls as projectile material are impacted onto at least the inner peripheral surface of the third intermediate material by a shot blasting process (dimpling process). As a result, oxide scale is removed from at least the inner peripheral surface of the third intermediate material and recessed lubricant holding portions 11 are formed on at least the inner peripheral surface of the third intermediate material. Therefore, at the stage when the surface roughening process, in this example shot blasting process, is completed, lubricant holding portions 11 (miniature recessed portions in this example) are formed not only on the surface of the circulation groove 9 but also on the surface of the nut-side spiral groove 7.

### <Grinding Process>

After that, the nut-side spiral groove 7 provided on the inner peripheral surface of the fourth intermediate material is ground to obtain a finished nut 3. Grinding of the circulation groove 9 is not performed in this process. Irregularities (lubricant holding portions 11) formed on the surface of the nut-side spiral groove 7 are removed by grinding.

Note that, when manufacturing the nut 3, other processes can be inserted between the processes described above.

With the ball screw device 1 of the present example, a sufficient amount of grease as a lubricant can be held in the circulation groove 9.

In other words, since the ball screw device 1 in the present example has one or more recessed lubricant holding portions 11 on the surface of the circulation groove 9, even when the balls 4 move while rubbing against the surface of the circulation groove 9, the lubricant is held in the one or more lubricant holding portions 11, and the amount of lubricant scraped out from the circulation groove 9 to the load path 8 is reduced. Therefore, a sufficient amount of lubricant can be held in the circulation groove 9, and depletion of the lubricant in the circulation groove 9 can be prevented. As a result, lubricant can be supplied to the balls 4 moving inside the circulation groove 9, and thus metal-to-metal contact between adjacent balls 4 and between the balls 4 and the circulation groove 9 can be prevented. Therefore, damage such as indentations to the balls 4 and circulation groove 9 can be suppressed.

Since the surface roughness of the circulation groove 9 is greater than that of the nut-side spiral groove 7, the flow rate of the lubricant flowing inside the circulation groove 9 is slower than the flow rate of the lubricant flowing inside the nut-side spiral groove 7. Therefore, the lubricant tends to accumulate in the circulation groove 9, making it easier for the lubricant to be held in the circulation groove 9.

In the present example, since the lubricant holding portions 11 are provided across the entire surface of the circulation groove 9, the lubricant can be held regardless of a position within the circulation groove 9. Therefore, it is possible to suppress variations in the amount of lubricant held in the circulation groove 9 depending on a position within the circulation groove 9.

In the present example, the lubricant holding portions 11 are minute recessed portions formed by a shot blasting process, and because the shape tends to be complex, the lubricant holding portions 11 have excellent lubricant holding ability. Therefore, a sufficient amount of lubricant can be held in the circulation groove 9.

By changing particle size, hardness, amount, and speed of abrasive material used in the shot blasting process, depth, size, and number of lubricant holding portions 11 can be easily changed. Therefore, the amount of lubricant held in the circulation groove 9 can be easily adjusted. In addition, the processing cost of the lubricant holding portions 11 can be reduced.

### [Second Example]

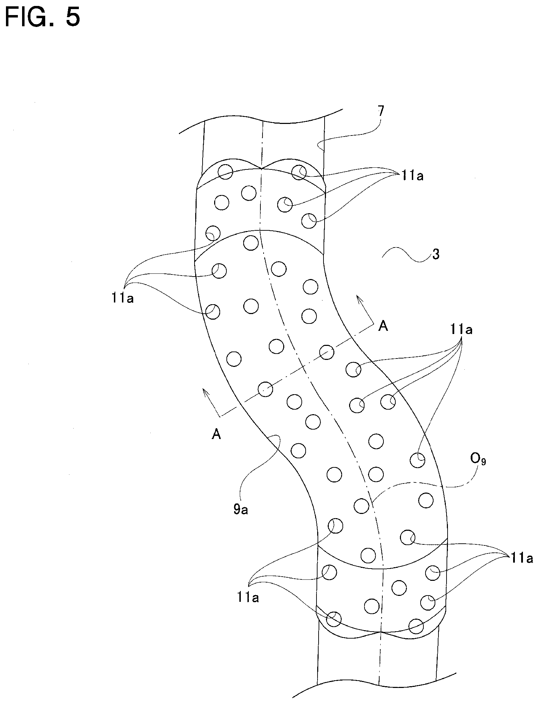

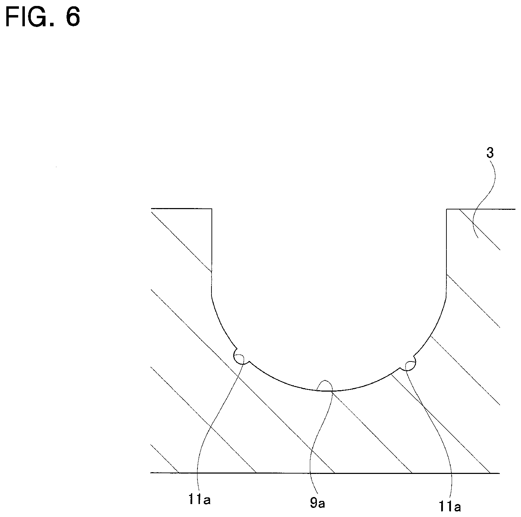

A second example of an embodiment according to the present disclosure will be described with reference to FIGS. 5 and 6.

In the present example, lubricant holding portions 11a are formed on a surface of a circulation groove 9a by a forging process using a punch, rather than being minute recessed portions formed by a shot blasting process as in the first example.

In the present example, the lubricant holding portions 11a are recessed portions with a hole shape.

The plurality of lubricant holding portions 11a formed on the surface of the circulation groove 9a are all independent and have the same shape. In the present example, as illustrated in FIG. 6, the lubricant holding portion 11a is configured in a hemispherical or spherical shape. Therefore, the lubricant holding portion 11a has a circular (including elliptical) opening shape. A depth of the lubricant holding portion 11a and a diameter of the opening portion are greater than a depth and diameter of an opening portion of the lubricant holding portion 11 formed by the shot blasting process in the first example.

The shape of the lubricant holding portion 11a formed by a forging process using a punch is not limited to a hemispherical (spherical crown) shape, but can also be configured in a shape of a cone, cylinder, pyramid or prism, for example.

In the present example, as in the first example, the lubricant holding portions 11a are provided across the entire surface of the circulation groove 9a and are arranged irregularly.

Depending on a position within the circulation groove 9a, density, shape, depth, and diameter of the opening portion of the lubricant holding portions 11a can also be varied.

In the present example as well, surface roughness of the circulation groove 9a is greater than that of the nut-side spiral groove 7 because the lubricant holding portions 11a are formed therein. The surface roughness of the circulation groove 9a is 1.6 µm or greater in terms of arithmetic mean roughness Ra.

An example of a manufacturing method for the nut 3 of the ball screw device 1 in the present example will be described.

First, a metal material having a roughly cylindrical tube shape is prepared. A forging process is performed on an inner peripheral surface of the material using a punch to form a circulation groove 9a, thereby obtaining a first intermediate material. The punch used in the present example has a same number of protruding portions on a tip-end surface thereof as the number of lubricant holding portions 11a formed in the circulation groove 9a. Each protruding portion has an outer surface shape that matches the inner surface shape of the lubricant holding portions 11a. By pressing the tip-end portion of the punch having this configuration against the inner peripheral surface of the material, the shape of the tip-end portion of the punch is transferred to the inner peripheral surface of the material, forming a circulation groove 9a that is generally S-shaped overall and has a plurality of recessed lubricant holding portions 11a on the surface thereof.

After the circulation groove formation process, a nut-side spiral groove formation process and a heat treatment process are carried out sequentially, similar to the manufacturing method of the nut 3 in the first example, to obtain a third intermediate material.

In the present example, after the heat treatment process, without performing a shot blasting process, a grinding process is performed on the nut-side spiral groove 7 provided on the inner peripheral surface of the third intermediate material is ground to obtain the finished nut 3. Note that oxide scale formed in the nut-side spiral groove 7 and the circulation groove 9a by the heat treatment process can be removed by processing methods other than shot blasting.

However, a shot blasting process can also be performed before the grinding process. In that case, two types of lubricant holding portions 11, 11a are formed on the surface of the circulation groove 9a: lubricant holding portions 11a formed by transfer from protruding portions provided on a tip-end surface of a punch, and lubricant holding portions 11 formed by the collision of projectile material with the surface of the circulation groove. In addition, during the grinding process, unevenness formed on the surface of the nut-side spiral groove 7 during the shot blasting process is removed.

In the present example, since the lubricant holding portions 11a are formed by a forging process using a punch, variations in the shape, depth, and size of the lubricant holding portions 11a formed on the surface of the circulation groove 9a can be prevented. Therefore, it is possible to suppress variations in an amount of lubricant (preferably grease) that can be held in the circulation groove 9a of each nut 3. In addition, since processing of the lubricant holding portions 11a can be performed at the same time as processing of the circulation groove 9a, the processing time for the nut 3 can be reduced.

The other configuration and effects of the second example are the same as those of the first example.

### [Third Example]

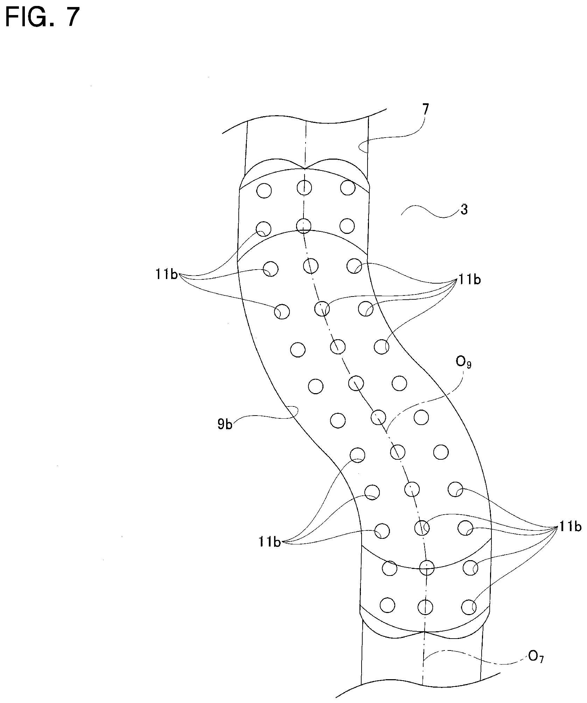

A third example of an embodiment according to the present disclosure will be described with reference to FIG. 7.

The present example is a modification of the second example, and only the arrangement of lubricant holding portions 11b differs from the arrangement of the lubricant holding portions 11a in the second example.

In the present example, a plurality of hole-shaped lubricant holding portions 11b are regularly arranged across the entire surface of a circulation groove 9b. The number of lubricant holding portions 11b formed on a surface of the circulation groove 9b is not particularly limited and can be appropriately set according to a depth of the lubricant holding portions 11b, a diameter of the opening portion, or the like. In addition, the arrangement of the lubricant holding portions 11b can also be such that, for example, the lubricant holding portions 11b are arranged at unequal intervals in a width direction, a length direction, or both directions of the circulation groove 9b while maintaining a regular arrangement. More specifically, a group of lubricant holding portions 11b that is formed by arranging a plurality of lubricant holding portions 11b at equal intervals in the width direction and length direction of the circulation groove 9b can be arranged in the width direction or length direction of the circulation groove 9b at a pitch different from a pitch of the lubricant holding portions of the group of lubricant holding portions (the pitch in the width direction or length direction of the circulation groove).

It is preferable that the plurality of lubricant holding portions 11b be arranged at equal intervals in both the width and length directions of the circulation groove 9b. In the present example, the lubricant holding portions 11b are arranged at three equally spaced locations in the width direction and at twelve equally spaced locations in the length direction within the circulation groove 9b.

In the present example, since the lubricant holding portions 11b are regularly arranged on the surface of the circulation groove 9b, it is possible to effectively suppress variations in the amount of grease held in the circulation groove 9b due to a position within the circulation groove 9b.

The other configuration and effects of the third example are the same as those of the first and second examples.

### [Fourth Example]

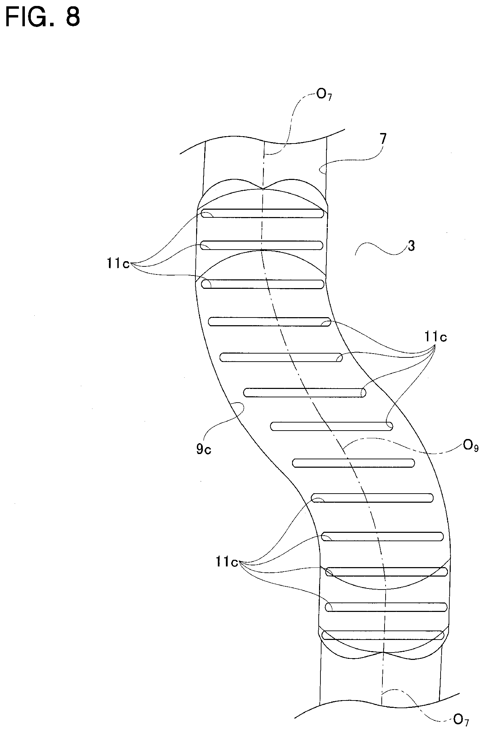

A fourth example of an embodiment according to the present disclosure will be described with reference to FIG. 8.

Lubricant holding portions 11c are formed on a surface of a circulation groove 9c by a forging process using a punch and are groove-shaped recessed grooves rather than hole-shaped recessed portions.

The lubricant holding portions 11c can be composed of grooves of any shape, such as straight, curved, or grid-like. Moreover, the groove shape of a cross-section of the lubricant holding portions 11c can be configured to be approximately C-shaped, approximately V-shaped, approximately U-shaped, or the like. The groove shape of the cross-section of the lubricant holding portions 11c can also be varied in a length direction of the lubricant holding portions 11c.

In the present example, the lubricant holding portions 11c are straight grooves. In addition, the lubricant holding portions 11c extend linearly in the axial direction of the nut 3. In other words, the lubricant holding portions 11c extend linearly in the width direction of the circulation groove 9c.

The plurality of lubricant holding portions 11c that are formed on the surface of the circulation groove 9c all have the same shape. A groove shape of the cross-section of the lubricant holding portions 11c is approximately C-shaped. In addition, the groove shape of the cross-section of the lubricant holding portions 11c does not change along the entire length of the lubricant holding portions 11c. Therefore, depth and opening width of the lubricant holding portions 11 are constant along the entire length of the lubricant holding portions 11c.

The lubricant holding portions 11c are regularly arranged across the entire surface of the circulation groove 9c. The plurality of lubricant holding portions 11c are spaced apart in the groove width direction of the lubricant holding portions 11c and are arranged parallel to each other. It is preferable that the lubricant holding portions 11c be arranged at equal intervals in the length direction of the circulation groove 9c. The number of lubricant holding portions 11c is not particularly limited and can be set appropriately according to the depth, the size of the opening width, or the like of the lubricant holding portions 11c, In the present example, thirteen lubricant holding portions 11c are arranged at equal intervals in the length direction of the circulation groove 9c.

In the present example, the circulation groove formation process is performed using a punch having the same number of protruding ridges on a tip-end surface thereof as the number of lubricant holding portions 11c formed in the circulation groove 9c. Each protruding ridge has an outer surface shape that matches an inner surface shape of the lubricant holding portion 11c. By pressing the tip-end portion of the punch having this configuration against the inner peripheral surface of the material, the shape of the tip-end portion of the punch is transferred to the inner peripheral surface of the material, forming a circulation groove 9c that is generally S-shaped overall and has a plurality of recessed groove-shaped lubricant holding portions 11c on the surface thereof.

In the present example, the angle of intersection between the direction of a center line O₉ of the circulation groove 9c, which is approximately the same as the direction of movement of the balls 4 inside the circulation groove 9c, and the lubricant holding portions 11c is approximately 90 degrees at the lubricant holding portions 11c formed at both ends in the length direction of the circulation groove 9c, and approximately 60 degrees or more at the lubricant holding portions 11c formed in an intermediate portion in the length direction of the circulation groove 9c. Therefore, all of the lubricant holding portions 11c can adequately hold grease. Therefore, it is possible to suppress variations in the amount of grease held in the circulation groove 9c due to the position within the circulation groove 9c.

The other configuration and effects of the fourth example are the same as those of the first to third examples.

### [Fifth Example]

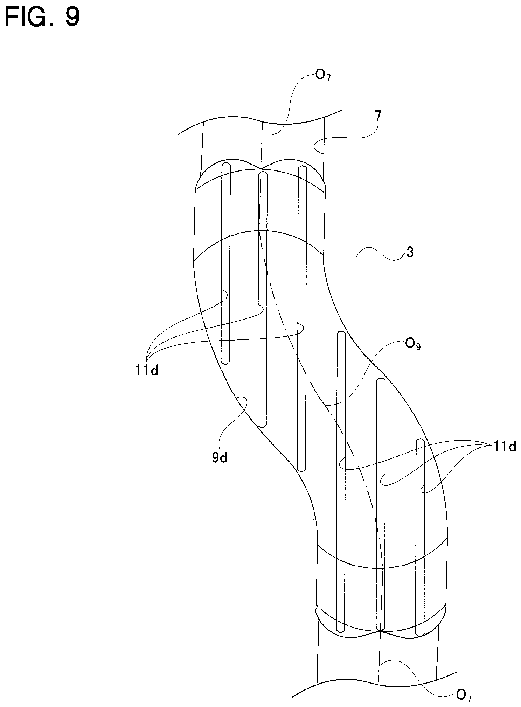

A fifth example of an embodiment according to the present disclosure will be described with reference to FIG. 9.

The present example is a modification of the fourth example, and only the extension direction of lubricant holding portions 11d differs from the extension direction of the lubricant holding portions 11c in the fourth example.

In the present example, the lubricant holding portions 11d extend linearly in the circumferential direction. More specifically, the lubricant holding portions 11d extend linearly in a direction substantially parallel to a center line O₇ of the nut-side spiral groove 7.

The lubricant holding portions 11d are regularly arranged across the entire surface of the circulation groove 9d. The plurality of lubricant holding portions 11d are spaced apart in the groove width direction of the lubricant holding portions 11d and are arranged parallel to each other. It is preferable that the lubricant holding portions 11d are arranged at equal intervals in the axial direction of the nut 3. The number of lubricant holding portions 11d is not particularly limited and can be set appropriately according to the depth, the size of the opening width, or the like of the lubricant holding portions 11d. In the present example, six lubricant holding portions 11d are arranged at equal intervals in the axial direction of the nut 3.

In the present example, the overall length of each lubricant holding portions 11d is long, and thus the amount of lubricant (preferably grease) that the lubricant holding portions 11d can hold increases. As a result, a sufficient amount of lubricant can be held in the circulation groove 9d.

The other configuration and effects of the fifth example are the same as those of the first to fourth examples.

### [Sixth Example]

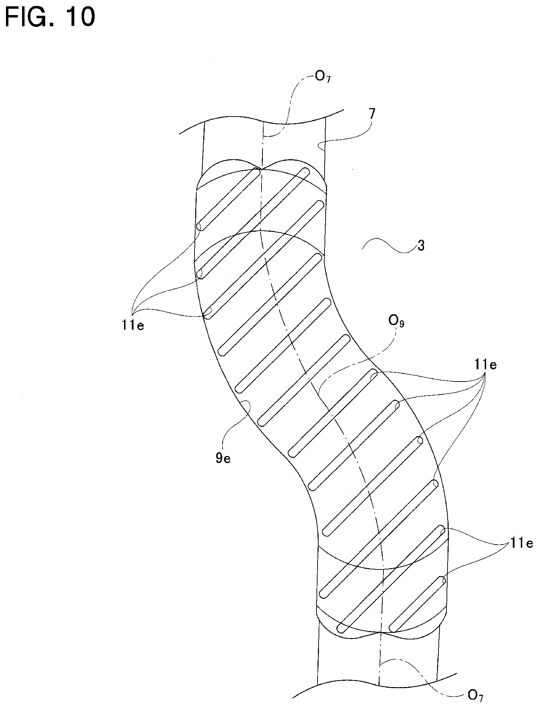

A sixth example of an embodiment according to the present disclosure will be described with reference to FIG. 10.

The present example is a modification of the fourth or fifth example, and only the extension direction of lubricant holding portions 11e differs from the extension direction of the lubricant holding portions 11c in the fourth example and the lubricant holding portions 11d in the fifth example.

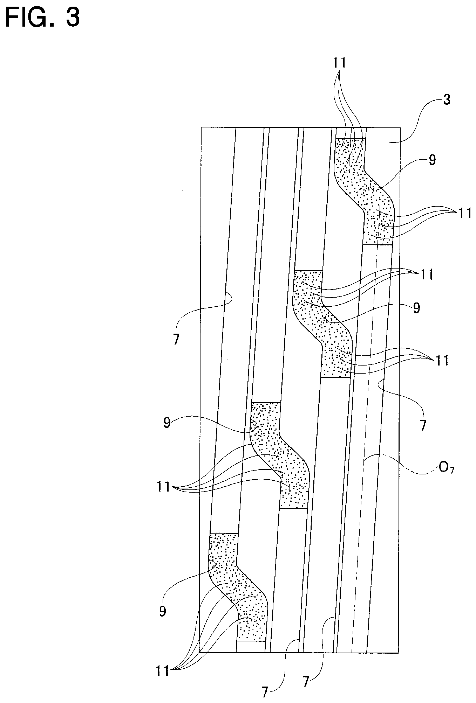

The lubricant holding portions 11e extend in a straight line so as to be inclined with respect to the center line O₇ of the nut-side spiral groove 7. The inclination angle of the lubricant holding portions 11c with respect to the center line O₇ is arbitrary. In the present example, the inclination angle of the lubricant holding portions 11c with respect to the center line O₇ is approximately 45 degrees. Note that the center line O₇ of the nut-side spiral groove 7 extends in a straight line when the inner peripheral surface of the nut 3 is expanded (see FIG. 3).

The lubricant holding portions 11e are regularly arranged across the entire surface of the circulation groove 9e. The plurality of lubricant holding portions 11e are spaced apart in the groove width direction of the lubricant holding portions 11e and are arranged parallel to each other. The number of lubricant holding portions 11e is not particularly limited and can be set appropriately according to the depth, the size of the opening width, or the like of the lubricant holding portions 11e. In the present example, twelve lubricant holding portions 11e are arranged at equal intervals on the surface of the circulation groove 9e.

In the present example, an angle at which a center line O₉ of the circulation groove 9e, which is approximately the same as the direction of movement of the balls 4 inside the circulation groove 9e, intersects with the lubricant holding portions 11e approaches 90 degrees while going toward an intermediate portion in the length direction of the circulation groove 9e. Therefore, a large amount of lubricant (preferably grease) can be held in the intermediate portion in the length direction of the circulation groove 9e. Thus, the amount of lubricant flowing from the circulation groove 9e to the load path 8 can be reduced.

The other configuration and effects of the sixth example are the same as those of the first to fifth examples.

### [Seventh Example]

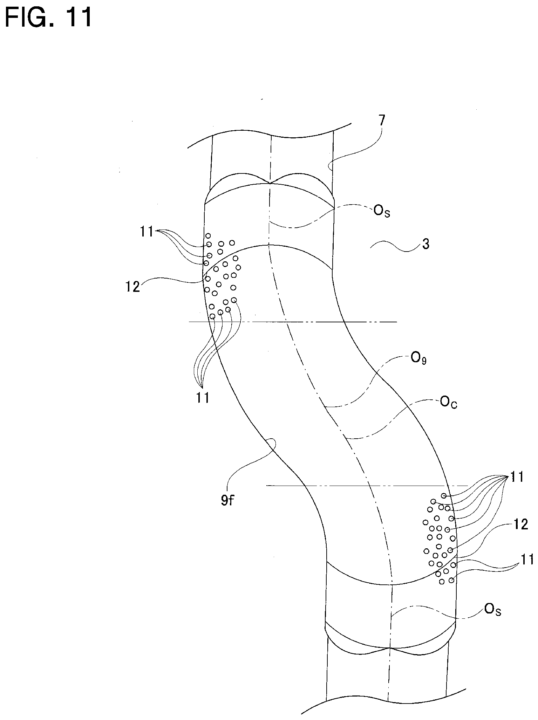

A seventh example of an embodiment according to the present disclosure will be described with reference to FIG. 11.

The present example is a modification of the first example, and only a formation range of the lubricant holding portions 11 differs from that of the first example.

In the present example, lubricant holding portions 11 are partially provided on the surface of a circulation groove 9f. In other words, the lubricant holding portions 11 are not provided on the entire surface of the circulation groove 9f, and the surface of the circulation groove 9f has a range where the lubricant holding portions 11 are provided and a range where the lubricant holding portions 11 are not provided.

The range where the lubricant holding portions 11 are provided and the range where the lubricant holding portions 11 are not provided can be arranged at any location in the length direction of the circulation groove 9f.

In the present example, when the circulation groove 9f is divided into three sections in the length direction thereof, the lubricant holding portions 11 are provided on both side portions in the length direction of the circulation groove 9f, but not in the intermediate portion in the length direction of the circulation groove 9f.

In the present example, the lubricant holding portions 11 are not provided on the entire surface of both side portions in the length direction of the circulation groove 9f, but rather are provided on only part of the surface of both side portions in the length direction of the circulation groove 9f. More specifically, the lubricant holding portions 11 are provided only on the surface of ball scooping portions 12 that are provided on a part of both side portions in the length direction of the circulation groove 9f, and in the vicinity thereof. Note that the ball scooping portion 12 is a portion that scoops up the balls 4 from the load path 8 to the circulation groove 9f. The ball scooping portions 12 are located on the surface of the circulation groove 9f at the boundary between a straight portion Os and a curved portion Oc of the center line O₉ of the circulation groove 9f, and on a far side from the center of curvature of the curved portion Oc.

Alternatively, the lubricant retaining portions 11 can be provided on the entire surface of both side portions in the length direction of the circulation groove 9f.

To manufacture the nut 3 in the present example, a portion of the surface of the circulation groove 9f that is separated from the ball scooping portions 12 and vicinity thereof is masked, and a shot blasting process is carried out. As a result, the lubricant holding portions 11 can be formed only on portions of the surface of the circulation groove 9f where the ball scooping portions 12 are provided and vicinity thereof.

In the present example, the lubricant holding portions 11 are provided on the ball scooping portions 12 and vicinity thereof, which are the parts of the surface of the circulation groove 9f that rub particularly strongly against the balls 4, and thus it is possible to effectively prevent metal-to-metal contact between the ball scooping portions 12 and the balls 4.

In the present example as well, the surface roughness of the circulation groove 9f is 1.6 µm or more in terms of arithmetic mean roughness Ra.

The other configuration and effects of the seventh example are the same as those of the first example. Note that for the second to sixth examples, similar to the seventh example, the formation range of the lubricant holding portions 11a to 11e can be a part of the surface of the circulation grooves 9a to 9e, preferably both side portions in the length direction of the circulation grooves 9a to 9e.

The first to seventh examples of an embodiment according to the present disclosure can be combined as appropriate, as long as there is no contradiction.

### REFERENCE SIGNS LIST

1 Ball screw device
2 Screw shaft
3 Nut
4 Ball
5 Shaft-side spiral groove
6 Land portion
7 Nut-side spiral groove
8 Load path
9, 9a to 9f Circulation groove
10 Annular space
11,11a to 11e Lubricant holding portion
12 Ball scooping portion
100 Nut
101 Circulation groove
102 Ball
103 Load path

## Claims

1. A ball screw device comprising:
a screw shaft having a shaft-side spiral groove on an outer peripheral surface thereof;
a nut having, on an inner peripheral surface thereof, a nut-side spiral groove, and a roughly S-shaped circulation groove connecting an end point and a start point of a spiral-shaped load path formed by the shaft-side spiral groove and the nut-side spiral groove; and
a plurality of balls arranged on an inner side of the load path and the circulation groove;
the circulation groove having, on a surface thereof, one or more recessed lubricant holding portions for holding lubricant.

2. The ball screw device according to claim 1, wherein
surface roughness of the circulation groove is greater than surface roughness of the nut-side spiral groove.

3. The ball screw device according to claim 1 or 2, wherein
the surface roughness of the circulation groove is 1.6 µm or more in terms of arithmetic mean roughness Ra.

4. The ball screw device according to any one of claims 1 to 3, wherein
a surface of the nut-side spiral groove is a ground surface, while the surface of the circulation groove is a non-ground surface.

5. The ball screw device according to any one of claims 1 to 4, wherein
the surface of the circulation groove is a blasted surface.

6. The ball screw device according to any one of claims 1 to 5, wherein
the lubricant holding portions are arranged irregularly.

7. The ball screw device according to any one of claims 1 to 5, wherein
the lubricant holding portions are arranged regularly.

8. The ball screw device according to any one of claims 1 to 4, wherein
The one or more lubricant holding portions are one or more hole-shaped recessed portions or one or more groove-shape recessed grooves.

9. The ball screw device according to any one of claims 1 to 8, wherein
the one or more lubricant holding portions are entirely provided across the surface of the circulation groove.

10. The ball screw device according to any one of claims 1 to 8, wherein
the one or more lubricant holding portions are partially provided on the surface of the circulation groove.

11. The ball screw device according to claim 10, wherein
the lubricant holding portions are provided on both side portions in a length direction of the circulation groove.

12. The ball screw device according to claim 11, wherein
the lubricant holding portions are provided in scooping portions provided on a part of both side portions in the length direction of the circulation groove.
